# EUROPEAN PATENT SPECIFICATION

(11) **EP 2 275 658 B1**
(45) Date of publication and mention of the grant of the patent: **01.08.2018**
(21) Application number: 09725879.2
(22) Date of filing: 23.03.2009
(51) Int. Cl.: F02D 19/02, F02D 41/02, F02D 41/04, F02M 21/04, F02D 41/00, F02D 41/14, F02M 21/02

(54) **GAS ENGINE CONTROLLER**
GASMOTORSTEUERUNG
DISPOSITIF DE COMMANDE DE MOTEUR A GAZ

(30) Priority: 24.03.2008 JP 2008075776
(43) Date of publication of application: 19.01.2011
(73) Proprietor: Yanmar Co., Ltd., Osaka-shi, Osaka 530-0013 (JP)
(72) Inventor: SUGIMORI, Keiji, Osaka-shi Osaka 531-0076 (JP); FUKUDA, Kenichi, Osaka-shi Osaka 531-0076 (JP); NAKAMURA, Hajime, Osaka-shi Osaka 530-0013 (JP); TANIHARA, Shiro, Osaka-shi Osaka 530-0013 (JP); YONEKURA, Shingo, Osaka-shi Osaka 530-0013 (JP)
(74) Representative: Jostarndt Patentanwalts-AG
(86) International application number: PCT/JP2009/055613
(87) International publication number: WO 2009/119480

(56) References cited:
- EP-A2- 0 690 215
- JP-A- 8 042 400
- JP-A- 8 093 568
- JP-A- H0 893 568
- JP-A- H06 288 267
- JP-A- H11 200 915
- JP-A- 2007 064 191
- JP-A- 2007 255 230

## Description

### Technical Field

The present invention relates to a gas engine controller or an art of opening correction control of a fuel gas supply amount regulation means, which is provided in a fuel gas supply route communicated with an intake route, for reducing NOx.

### Background Art

Conventionally, there is well known a gas engine as an engine that mixture of air and fuel gas is supplied to a combustion chamber. There is also well known lean burn control that air fuel ratio of the gas engine is controlled to the lean limit so as to reduce NOx. A fuel gas supply amount regulation valve is a fuel gas supply amount regulation means provided in a fuel gas supply route so as to control the air fuel ratio.

In the lean burn control method disclosed in the Japanese Patent Laid Open Gazette Hei. 10-131795, the opening of the fuel gas supply amount regulation valve is controlled based on an exhaust pressure sensor provided in an exhaust gas route so as to realize the lean burn in which misfire does not occur.

However, the lean burn control method disclosed in the Japanese Patent Laid Open Gazette Hei. 10-131795 requires the exhaust pressure sensor which is expensive, whereby it is disadvantageous that the production cost is high.

In the intake route of the gas engine, the intake flow rate is decreased because of aged degradation such as clogging of an air cleaner. Then, in the fuel gas supply amount regulation valve, it is necessary to correct the opening for the fuel gas supply amount following the decrease of the intake flow rate.

Furthermore, for example, opening correction of a gas engine mounted in an engine-driven heat pump is performed suitably after installation at the actual place. Then, the opening correction of fuel supply amount is desirably performed in a short time.

### Disclosure of Invention

### Problems to Be Solved by the Invention

The purpose of the present invention is to provide a gas engine controller which can perform opening correction of a fuel gas supply amount regulation valve fore reducing NOx accurately in a short time.

### Means for Solving the Problems

A gas engine controller according to the present invention is provided by claim 1. The gas engine controller comprises: an engine load detection means which detects engine load; an engine rotational speed detection means which detects engine rotational speed; a fuel gas supply amount regulation means which is provided in a fuel gas supply route communicated with an intake route and regulates fuel gas supply amount to the intake route; and an opening regulation means which regulates the fuel gas supply amount regulation means so as to make a combustion variation, based on engine rotational speed difference between momentary engine rotational speed at power stroke of a cylinder in one combustion cycle and average engine rotational speed of the one combustion cycle, converge to a target combustion variation based on the engine load, wherein an opening correction means is provided which increases or decreases opening of the fuel gas supply amount regulation means which is calculated based on the target combustion variation forcibly by predetermined degree at predetermined timing and calculates an opening correction value of the fuel gas supply amount regulation means based on the maximum value and the minimum value of the opening in a process of the convergence to the target combustion variation.

In the gas engine controller according to the present invention, preferably, the opening correction means calculates the opening correction value based on an interpolation of the maximum value and the minimum value of the opening in the process of the convergence to the target combustion variation multiplied by a weight coefficient.

In the gas engine controller according to the present invention, preferably, the opening correction means detects the maximum value and the minimum value of the opening in the process of the convergence to the target combustion variation respectively twice, and calculates the opening correction value based on the two maximum values and the two minimum values.

### Effect of the Invention

According to the gas engine controller of the present invention, correction of opening of a fuel gas supply regulation valve for reducing NOx can be carried out in a short time with high precision.

### Brief Description of Drawings

[Fig. 1] It is a schematic drawing of a gas engine controller and a gas engine according to the present invention.
[Fig. 2] It is a block diagram of the gas engine controller according to the present invention.
[Fig. 3] It is a graph of a PIV map according to the present invention.
[Fig. 4] It is a block diagram of opening regulation control according to the present invention.
[Fig. 5] It is a flow chart of opening correction control according to the present invention.
[Fig. 6] It is a chart of time series change of the opening correction control according to the present invention.

### The Best Mode for Carrying out the Invention

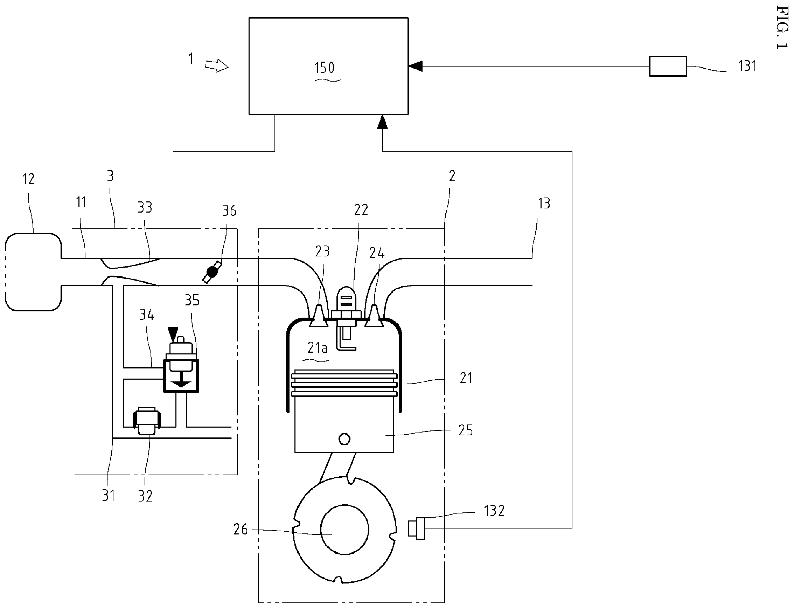

Explanation will be given on an engine 2 which is a control target of a gas engine controller 1 referring Fig. 1.

In this embodiment, the engine 2 is mounted in an engine-driven heat pump.

The engine 2 is a 3-cylindered engine using gaseous fuel gas such as natural gas and has three cylinders including one cylinder shown in the drawing.

The engine 2 includes an intake route, a fuel gas supply route, an engine body and an exhaust route.

The intake route includes intake piping 11 which supplies mixed gas generated by mixing air taken in from the outside and the fuel gas with a mixer 3 discussed later and an air cleaner 12 which removes dust and the like in the air.

The engine body includes a combustion chamber 21a which is a space for combustion of the mixed gas, an intake valve 23 which is opened and closed in a cylinder head 21 so as to communicate the intake piping 11 with the combustion chamber 21a and cut off the communication, a sparking plug 22 which generates sparks for the combustion of the mixed gas supplied to the combustion chamber 21a, a piston 25 which is slid vertically by expansion of the mixed gas supplied to the combustion chamber 21a caused by the combustion, a crankshaft 26 which is rotated by the reciprocation of the piston 25, and an exhaust valve 24 which is opened and closed in the cylinder head 21 so as to communicate an exhaust piping 13 with the combustion chamber 21a and cut off the communication.

The exhaust route includes the exhaust piping 13 which discharges exhaust gas generated by the combustion of the mixed gas in the combustion chamber 21a to the outside of the engine 2.

The mixer 3 as the fuel gas supply route includes first fuel gas supply piping 31 which supplies the fuel gas to the inside of the intake piping 11, an on-off fuel valve 32 which increases the fuel gas temporarily from the first fuel gas supply piping 31, second fuel supply piping 34 which is connected to the first fuel gas supply piping 31 while bypassing the on-off fuel valve 32, a fuel gas supply regulation valve 35 as a fuel gas supply regulation means which regulates the amount of the fuel gas passing through the second fuel supply piping 34, that is, the amount of the fuel gas included in the mixed gas, a venturi 33 which makes pressure difference between the fuel gas in the first fuel gas supply piping 31 and the intake air and supplies the fuel gas from the first fuel gas supply piping 31 to the intake piping 11, and a throttle valve 36 which regulates supply amount of the mixture gas. In the case that the control which increases the fuel gas temporarily is not included, the on-off fuel valve 32 is omitted.

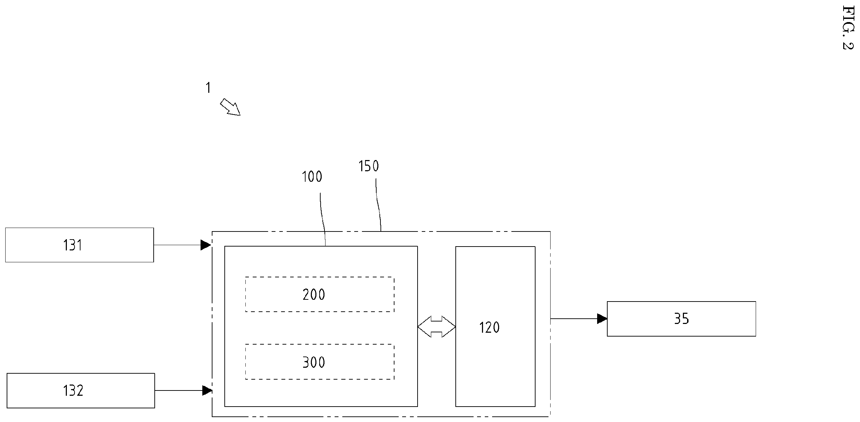

Explanation will be given on the gas engine controller 1 referring Figs. 1 and 2.

The gas engine controller 1 mainly includes the fuel gas supply regulation valve 35, an engine rotational speed sensor 132, a high-tension sensor 131, and an electronic control unit (hereinafter, referred to as ECU) 150 which performs various kinds of calculation. The engine rotational speed sensor 132 as an engine rotational speed detection means measures pulse signals for every predetermined angles of a gear rotated synchronously with the crankshaft 26. In this embodiment, engine rotational speed N is calculated based on pulse number measurement time corresponding to one combustion cycle (two rotations of the crankshaft 26). On the other hand, each of momentary engine rotational speeds n1, n2 and n3 of the cylinders is calculated based on pulse number measurement time corresponding to power stroke of corresponding one of the cylinders.

The high-tension sensor 131 as an engine load detection means detects discharge pressure of a compressor of the engine-driven heat pump (high-tension pressure HP), and then calculates adiabatic compression work of the coolant with the compressor (not shown). Additionally, the engine load detection means may detects engine cooling water temperature, engine lubricating oil temperature and pressure so as to calculate the load based on the correlation therebetween.

The ECU 150 includes a controller 100 which has functions as an opening regulation means 200 and an opening correction means 300 discussed later and a memory part 120.

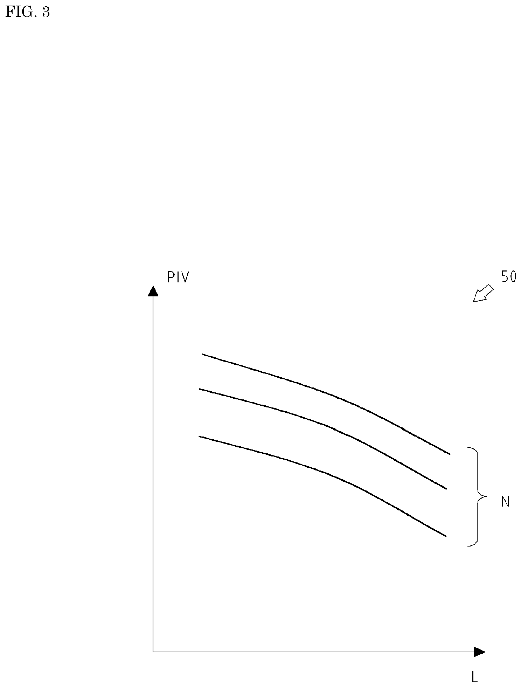

Explanation will be given on a PIV map 50 which shows a fuel variation referring Fig. 3.

In the PIV map 50, a target combustion variation PIVm is plotted which is equivalent to a target lean burn area corresponding to the engine rotational speed N and engine load L. The PIV map 50 is previously stored in the memory part 120 included in the ECU 150.

In this case, there is the correlation that the closer to theoretical air fuel ratio the fuel supply amount to each of the cylinder becomes, the smaller the rotational speed difference between the engine rotational speed N and corresponding one of the momentary engine rotational speeds n1, n2 and n3 becomes and the larger the rotational speed difference at the lean burn area becomes. A function based on the rotational speed difference is employed as the fuel variation.

Namely, the larger the fuel variation is, the smaller NOx generation amount is at the lean burn area (however, misfire tends to occur), and the smaller the fuel variation is, the closer to the theoretical air fuel ratio the fuel supply amount is and the more NOx generation amount is (however, misfire is difficult to occur). The target combustion variation PIVm is selected to be equivalent to the lean burn area in the vicinity of the limit of prevention of misfire.

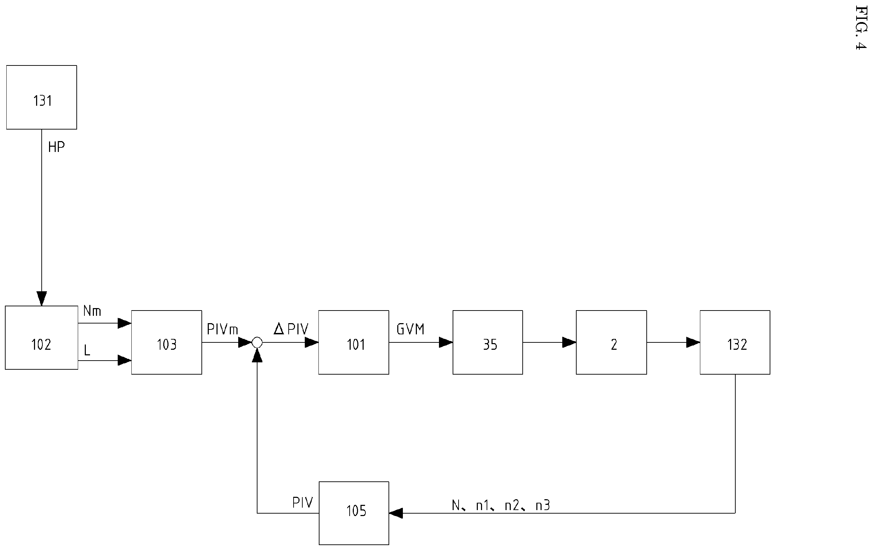

Explanation will be given on the opening regulation control referring Fig. 4.

As the opening regulation means 200, the controller 100 has function for performing the opening regulation control of the fuel gas supply regulation valve 35.

A target engine rotational speed set part (Nm calculation part) 102, a target combustion variation calculation part (PIVm calculation part) 103, an opening calculation part (GVM calculation part) 101 and a combustion variation calculation part (PIV calculation part) 105 are the functions of the controller 100 as the opening regulation means 200.

Firstly, the Nm calculation part 102 calculates the target engine rotational speed Nm based on the engine load L which is the adiabatic compression work of the coolant in the compressor calculated based on the high-tension pressure HP. Next, the PIVm calculation part 103 calculates the target combustion variation PIVm with the PIV map 50 in the memory part 120 based on the target engine rotational speed Nm and the engine load L. On the other hand, the PIV calculation part 105 calculates an actual combustion variation PIV based on the engine rotational speed N and the momentary engine rotational speeds n1, n2 and n3 at the power stroke of the cylinders. In this case, the GVM calculation part 101 has function for calculating fuel gas supply amount regulation valve opening GVM (hereinafter, referred to as opening GVM) from deviation Δ PIV. The deviation Δ PIV is the deviation between the target combustion variation PIVm and the actual combustion variation PIV.

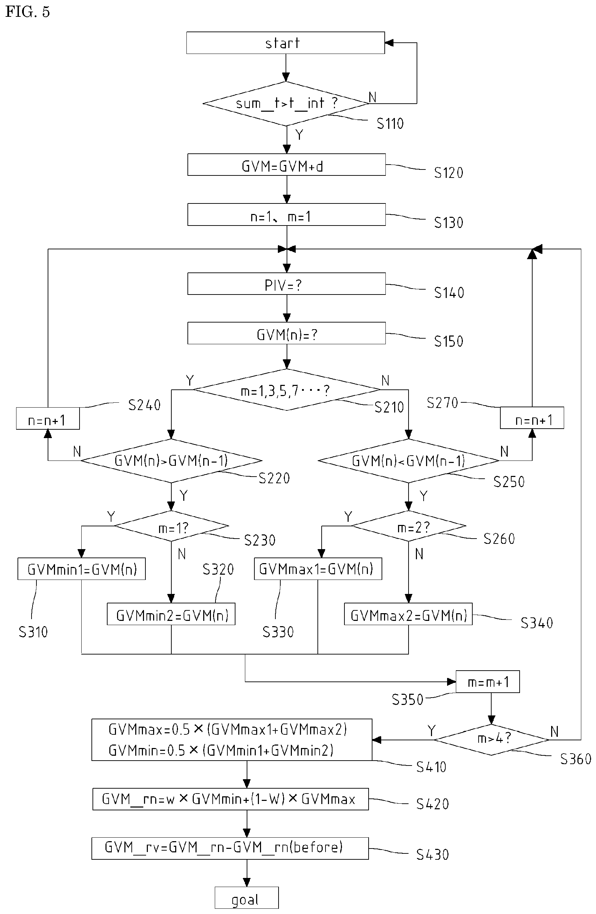

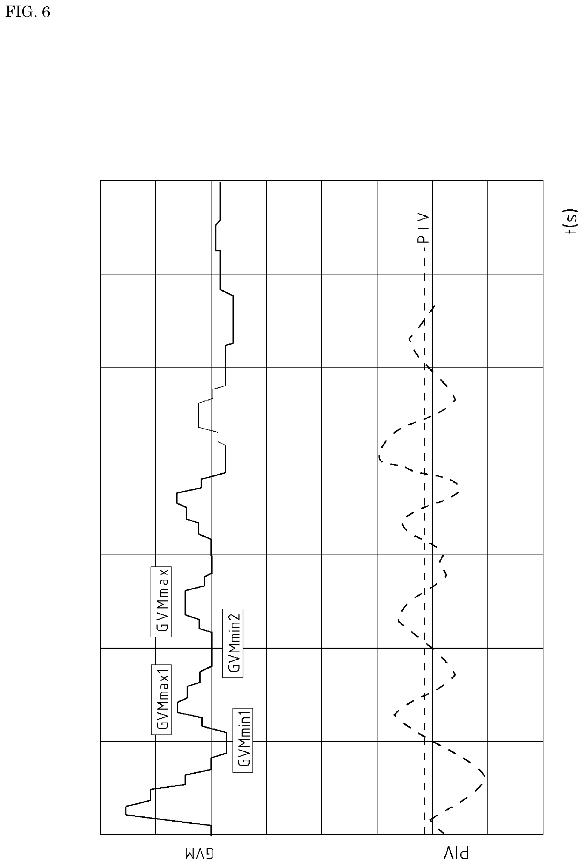

Explanation will be given on the opening correction control referring Figs. 5 and 6.

As the opening correction means 300, the controller 100 has function for performing the opening correction control of the fuel gas supply regulation valve 35.

Explanation will be given on S110 to S150 referring Fig. 5. In below opening correction control, the engine rotational speed N is fixed to predetermined rotational speed.

Firstly, the controller 100 judges whether integrated operation time sum_t of the engine 2 reaches predetermined time t_int or not (S110). In this case, the integrated operation time sum t is reckoned after installation at the actual place or after maintenance.

Next, when the integrated operation time sum t reaches the predetermined time t_int, the controller 100 increases forcibly the opening GVM for predetermined amount d from opening command value from the GVM calculation part 101 (S120) and sets a sampling number n and an extreme value number m to be 1 (S130). In this case, the sampling number n indicates number of sampling the opening GVM from the start of the opening correction control. Namely, GVM(n) is the opening GVM sampled by the controller 100 at nth time. The extreme value number m indicates number of the extreme value to be detected at present from the start of the opening correction control while the maximum value and minimum value are referred to as the extreme value. In the case that opening GVM is increased forcibly, that is, the fuel gas is increased at the beginning of the control and an initial value of the extreme value number m is set to be 1 as this embodiment, the minimum value of the opening GVM appears when the extreme value number m is an uneven number, and the maximum value of the opening GVM appears when the extreme value number m is an even number.

In the case that the opening GVM is decreased forcibly for predetermined amount d, that is, the fuel gas is decreased and the initial value of the extreme value number m is set to be 1, the maximum value of the opening GVM appears when the extreme value number m is an uneven number, and the minimum value of the opening GVM appears when the extreme value number m is an even number.

Next, the controller 100 calculates the actual combustion variation PIV with the opening regulation means 200 (S140) as mentioned above, and calculates the opening GVM(n) so as to converge the actual combustion variation PIV to the target combustion variation PIVm (S150).

Explanation will be given on time series change of the opening GVM and the actual combustion variation PIV in the opening correction control referring Fig. 6.

In Fig. 6, the axis of abscissa indicates time (s), the lower side of the axis of ordinates indicates the actual combustion variation PIV and the upper side of the axis of ordinates indicates the opening GVM. In Fig. 6, a solid line indicates the time series change of the opening GVM, and dashed lines indicate the time series change of the actual combustion variation PIV and the target combustion variation PIVm. At S120, the opening GVM is increased forcibly for the predetermined amount d so that the actual combustion variation PIV is reduced suddenly. The controller 100 reduces the opening GVM so as to make the actual combustion variation PIV reduced suddenly return to the target combustion variation PIVm.

Accordingly, the opening GVM and the actual combustion variation PIV repeat the increase and decrease mutually so as to be converged to the target combustion variation PIVm. The opening correction control is performed based on the maximum value and the minimum value of the opening GVM in this case.

Next, explanation will be given on S210 to S360 in detail referring Fig. 5.

In S210 to S360, the controller 100 calculates the two maximum values GVMmax1 and GVMmax2 and the two minimum values GVMmin1 and GVMmin2 about the opening GVM(n) that is the result of forcible increase of the opening GVM for the predetermined amount d (see Fig. 6).

S210 is the step in which whether GVM(n) to be determined goes toward the minimum value or toward the maximum value is judged. As mentioned above, GVM(n) to be determined is the minimum value when the extreme value number m is an uneven number and is the maximum value when the extreme value number m is an even number.

S220 is the step in which whether GVM(n) is larger than GVM(n-1), that is, GVM(n) is the minimum value or not is judged. S250 is the step in which whether GVM(n) is smaller than GVM(n-1), that is, GVM(n) is the maximum value or not is judged.

Each of S240 and S270 is the step in which the sampling number n is increased so as to make GVM(n) reach corresponding one of the minimum value and the maximum value, thereby returning to S140.

Each of S230 and S260 is the step in which whether corresponding one of the maximum value and the minimum value is the first or second from the start of the opening correction control.

Each of S310 and S320 is the step in which GVM(n) at the present is regarded as corresponding one of the first minimum value GVMmin1 and the second minimum value GVMmin2. On the other hand, each of S330 and S340 is the step in which GVM(n) at the present is regarded as corresponding one of the first maximum value GVMmax1 and the second maximum value GVMmax2.

S350 is the step in which the extreme value number m is increased for 1 when the maximum value (or the minimum value) is detected. S360 is the step in which whether the extreme value number m is larger than 4 or not, and when the extreme value number m is larger than 4, the detection of the extreme value number is finished and the control is shifted to S410. Namely, when the maximum value and the minimum value are detected respectively twice, the extreme value number detection step from S130 is finished.

Explanation will be given on S410 to S430 referring Fig. 3.

Firstly, the controller 100 calculates an average maximum value GVMmax from the average of the maximum values GVMmax1 and GVMmax2 (S410). Simultaneously, the controller 100 calculates an average minimum value GVMmin from the average of the minimum values GVMmin1 and GVMmin2 (S420).

Next, the controller 100 calculates an interpolation of W : W-1 of the average minimum value GVMmin and the average maximum value GVMmax with a weight coefficient W as an opening renewal value GVM_rn (S420).

Next, the controller 100 calculates an opening correction value GVM_rv by subtracting the opening renewal value GVM_rn calculated in the last opening correction control from the actual opening renewal value GVM_rn (S430). The opening renewal value GVM_rn is absolute magnitude and the difference with the last renewal value is employed as the actual renewal value.

Accordingly, by increasing or decreasing forcibly the opening GVM of the fuel gas supply regulation valve 35, the maximum values GVMmax1 and GVMmax2 and the minimum values GVMmin1 and GVMmin2 of the opening GVM can be ascertained in a short time and the calculation accuracy of the opening correction value GVM_rv can be improved. Namely, the opening correction for maintaining the lean burn of the fuel gas supply regulation valve 35 can be performed accurately in a short time without any exhaust pressure sensor or the like.

The actual combustion variation PIV can be made converge to the target combustion variation PIVm regardless of the reduction of intake flow rate caused by the aged degradation of the intake route, whereby NOx generation amount can be reduced.

Furthermore, the detection time of each of the maximum values and the minimum values for the calculation of the correction value is limited to two, whereby the optimal control for reducing the time and improving the accuracy can be executed.

Moreover, by applying the weight on the average minimum value GVMmin or the average maximum value GVMmax, importance can be attached to one of the lean burn that the weight is applied on the average minimum value GVMmin and the misfire prevention that the weight is applied on the average maximum value GVMmax.

### Industrial Applicability

The present invention is applicable to a gas engine.

## Claims

1. A gas engine controller comprising:
an engine load detection means which is adapted to detect engine load (L); an engine rotational speed detection means which is adapted to detect engine rotational speed (N); a fuel gas supply amount regulation means (35) which is provided in a fuel gas supply route (31) communicated with an intake route (11) and is adapted to regulate fuel gas supply amount to the intake route; and
an opening regulation means which is adapted to regulate the fuel gas supply amount regulation means so as to make a combustion variation, based on engine rotational speed difference between momentary engine rotational speed at power stroke of a cylinder in one combustion cycle and average engine rotational speed of the one combustion cycle, converge to a target combustion variation based on the engine load,
wherein an opening correction means is provided which is adapted to increase or decrease opening of the fuel gas supply amount regulation means which is calculated based on the target combustion variation forcibly by predetermined degree at predetermined timing and calculates an opening correction value of the fuel gas supply amount regulation means based on the maximum value and the minimum value of the opening in a process of the convergence to the target combustion variation.

2. The gas engine controller according to claim 1, wherein the opening correction means is adapted to calculate the opening correction value based on an interpolation of the maximum value and the minimum value of the opening in the process of the convergence to the target combustion variation multiplied by a weight coefficient.

3. The gas engine controller according to claim 1 or 2, wherein the opening correction means is adapted to detect the maximum value and the minimum value of the opening in the process of the convergence to the target combustion variation respectively twice, and is adapted to calculate the opening correction value based on the two maximum values and the two minimum values.

## Patentansprüche

1. Gasmotorsteuerung, aufweisend:
ein Mittel zum Detektieren einer Motorlast, das eingerichtet ist, eine Motorlast (L) zu detektieren;
ein Mittel zum Detektierten einer Motordrehzahl, das eingerichtet ist, eine Drehzahl (N) eines Motors zu detektieren;
ein Mittel (35) zum Regeln einer Kraftstoffgas-Zufuhrmenge, das in einem Zufuhrpfad (31) für Kraftstoffgas vorgesehen ist und mit einem Einlasspfad (11) kommuniziert, und eingerichtet ist, eine Kraftstoffgas-Zufuhrmenge an den Einlasspfad zu regeln; und
ein Mittel zum Regeln einer Öffnungsmenge, das eingerichtet ist, das Mittel zum Regeln einer Kraftstoffgas-Zufuhrmenge dahingehend zu regeln, dass veranlasst wird, das auf Grundlage des Drehzahlunterschieds des Motors zwischen einer momentanen Drehzahl in einem Arbeitstakt des Zylinders in einem Verbrennungszyklus und einer durchschnittlichen Drehzahl des Motors des einen Verbrennungszyklus eine Verbrennungsvariation zu einer Soll-Verbrennungsvariation auf Grundlage der Motorlast konvergiert,
wobei ein Öffnungs-Korrekturmittel vorgesehen ist, das eingerichtet ist, ein Öffnen des Mittels zum Regeln einer Kraftstoffgas-Zufuhrmenge zwangsweise um ein vorgegebenes Maß zu einem vorgegeben Zeitpunkt zu erhöhen oder zu verringern, was auf Grundlage der Soll-Verbrennungsvariation berechnet wird, und auf Grundlage des Maximalwerts und des Minimalwerts des Öffnens in einem Prozess der Konvergenz zur Soll-Verbrennungsvariation einen Öffnungskorrekturwert des Mittels zum Regeln einer Kraftstoffgas-Zufuhrmenge berechnet.

2. Gasmotorsteuerung nach Anspruch 1, wobei das Mittel zum Korrigieren eines Öffnungswerts eingerichtet ist, den Öffnungskorrekturwert auf Grundlage einer Interpolation des Maximalwerts und des Minimalwerts des Öffnens beim Prozess der Konvergenz zu der Soll-Verbrennungsvariation multipliziert mit einem Gewichtungskoeffizienten zu errechnen.

3. Gasmotorsteuerung nach Anspruch 1 oder 2, wobei das Öffnungskorrekturmittel eingerichtet ist, den Maximalwert und den Minimalwert des Öffnens in dem Prozess der Konvergenz zu der Soll-Verbrennungsvariation jeweils zweimal zu detektieren, und eingerichtet ist, den Öffnungskorrekturwert auf Grundlage der beiden Maximalwerte und der beiden Minimalwerte zu berechnen.

## Revendications

1. Contrôleur pour moteur à gaz, comprenant :
un moyen de détection de charge de moteur, lequel est apte à détecter une charge de moteur (L) ;
un moyen de détection de vitesse de rotation de moteur, lequel est apte à détecter une vitesse de rotation de moteur (N) ;
un moyen de régulation de quantité d'alimentation en gaz combustible (35), lequel est prévu dans une route d'alimentation en gaz combustible (31) communiquant avec une route d'admission (11) et est apte à réguler la quantité d'alimentation en gaz combustible vers la route d'admission, et un moyen de régulation d'ouverture, lequel est apte à réguler le moyen de régulation de quantité d'alimentation en gaz combustible, de manière à faire en sorte qu'une variation de combustion, sur la base d'une différence de vitesse de rotation de moteur entre une vitesse de rotation de moteur momentanée sur la course de combustion d'un cylindre dans un cycle de combustion et une vitesse de rotation de moteur moyenne du un cycle de combustion, converge vers une variation de combustion cible sur la base de la charge de moteur, et
dans lequel un moyen de correction d'ouverture est prévu, lequel est apte à augmenter ou diminuer une ouverture du moyen de régulation de quantité d'alimentation en gaz combustible, laquelle est calculée sur la base de la variation de combustion cible de manière forcée à raison d'un degré prédéterminé et à un temps prédéterminé, et calcule une valeur de correction d'ouverture du moyen de régulation de quantité d'alimentation en gaz combustible sur la base de la valeur maximale et de la valeur minimale de l'ouverture lors d'un processus de convergence vers la variation de combustion cible.

2. Contrôleur pour moteur à gaz selon la revendication 1, dans lequel le moyen de correction d'ouverture est apte à calculer la valeur de correction d'ouverture sur la base d'une interpolation de la valeur maximale et de la valeur minimale de l'ouverture lors du processus de convergence vers la variation de combustion cible multipliée par un coefficient de pondération.

3. Contrôleur pour moteur à gaz selon la revendication 1 ou 2, dans lequel le moyen de correction d'ouverture est apte à détecter respectivement la valeur maximale et la valeur minimale de l'ouverture lors du processus de convergence vers la variation de combustion cible par deux fois, et est apte à calculer la valeur de correction d'ouverture sur la base des deux valeurs maximales et des deux valeurs minimales.
